# EUROPEAN PATENT SPECIFICATION

(11) **EP 1 103 703 B1**
(45) Date of publication and mention of the grant of the patent: **07.04.2010**
(21) Application number: 99924008.8
(22) Date of filing: 11.06.1999
(51) Int. Cl.: F01P 7/16

(54) **THERMOSTAT DEVICE**
THERMOSTATVENTIL
DISPOSITIF THERMOSTAT

(30) Priority: 23.03.1999 JP 7831199
(43) Date of publication of application: 30.05.2001
(73) Proprietor: Nippon Thermostat Co., Ltd., Kiyose-shi, Tokyo 204-0003 (JP)
(72) Inventor: SUZUKI, Toshitaka, Kiyose-City, Tokyo 204-0003 (JP); TOKUNAGA, Masahiro, Kiyose-City, Tokyo 204-0003 (JP); SUDA, Hiroshi, Kiyose-City, Tokyo 204-0003 (JP)
(74) Representative: Morelle, Guy Georges Alain
(86) International application number: PCT/JP1999/003135
(87) International publication number: WO 2000/057042

(56) References cited:
- EP-A- 0 890 717
- FR-A- 632 566
- JP-A- 09 268 914
- JP-U- 55 054 522
- US-A- 3 384 056

## Description

### TECHNICAL FIELD

The present invention relates to a thermostat device having a valve body that rotates using a supported shaft portion as a fulcrum, and more particularly to a thermostat device that can be assembled easily and reduced in size.

### BACKGROUND ART

Typically, a thermostat device installed in a cooling system of an internal combustion engine or the like comprises a sensor case housing a thermal expansion body that senses variation in the temperature of a cooling fluid filled into a circulation passage of a cooling system and expands/contracts accordingly. A valve body opens and closes in accordance with variation in the volume of the thermal expansion body accompanying its expansion and contraction, and thus the cooling fluid is maintained at a predetermined temperature.

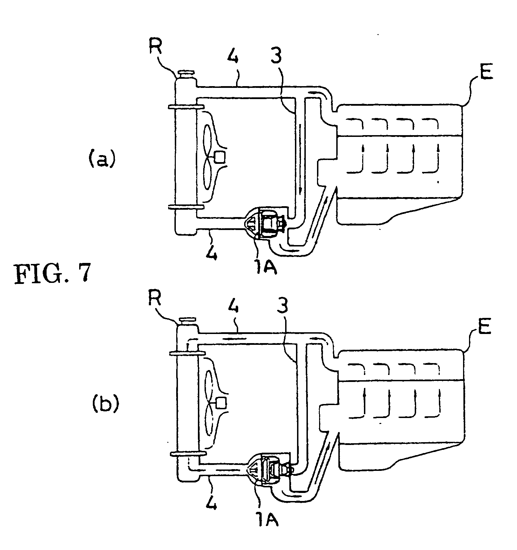

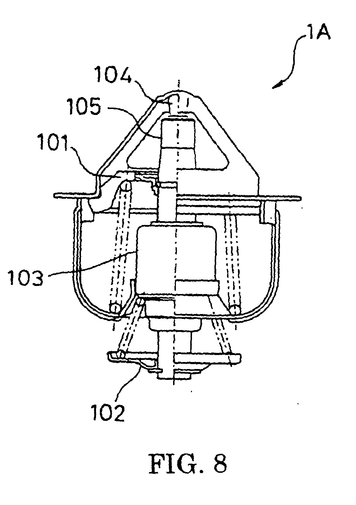

A poppet type device shown in Figs. 7 and 8 is an example of a typical thermostat device. Fig. 7 is a pattern diagram of a thermostat device in which a poppet type thermostat device is disposed in a circulation passage, Fig. 7A showing a state in which a bypass passage is open, and Fig. 7B showing a state in which the bypass passage is closed. Fig. 8 is a partial sectional side view of the poppet type thermostat device.

As shown in Fig. 8, a thermostat device 1A (to be referred to hereafter as a first conventional device 1A) has a first valve body 101 and a second valve body 102 (bypass valve). When the temperature of cooling fluid is low during warm start-up of an engine E or the like (see Fig. 7A), the first valve body 101 is closed and a circulation passage 4 on a radiator R side is blocked. Note that in this state, the second valve body 102 (bypass valve) is open, and therefore the cooling fluid circulates from an outlet side of the engine E to an inlet side of the engine E via a bypass passage 3.

When the cooling fluid warms to or above a set temperature, a thermal expansion body in the sensor case 103 expands, thereby causing the first valve body 101 to open via a piston rod 104 and causing the cooling fluid to circulate to the circulation passage 4 on the radiator R side. Note that in this state, the valve body 102 (bypass valve) is closed, and the bypass passage 3 is blocked.

The first conventional device 1A functioning in this manner is not only used to cool a high-temperature internal combustion engine or the like, and is often disposed on the inlet side shown in Fig. 7 to maintain the temperature of the cooling fluid and respond to sudden temperature variation.

In Fig. 7, the first conventional device 1A is disposed on the inlet side of the internal combustion engine or the like, or more specifically in a position where cooling fluid from the engine E, which has passed through the bypass passage 3, and cooling fluid from the radiator R mix together. In so doing, cooling fluid having different temperatures mixes more easily than in a case where the first conventional device 1A is disposed on the outlet side. As a result, the width of water temperature hunting is reduced, and differential pressure variation is reduced due to the balance between the bypass passage 3 and the radiator R.

Incidentally, in the poppet type first conventional device 1A, the first valve body 101 and second valve body 102 (bypass valve) are disposed in the circulation passage 4. Furthermore, the piston rod 104 for driving the valve bodies 101, 102 (bypass valve) is permanently submerged in the cooling fluid. Therefore, the cooling fluid may infiltrate the piston rod 104 and a piston guide 105, affecting the opening/closing action of the valves.

Further, depending on the components contained in the cooling fluid, scale or the like may become affixed to these members so as to damage their functions. As a result, accurate temperature control of the cooling fluid in the circulation passage 4 and bypass passage 3 may become impossible, leading to deterioration of the performance of the engine E and so on.

Moreover, the sensor case 103, which serves as a cooling fluid sensing portion, as well as the first valve body 101 and second valve body 102 (bypass valve) are disposed in the circulation passage 4, leading to an increase in the flow resistance of the cooling fluid. Therefore, to obtain a predetermined flow rate, the inner diameter of the circulation passage housing the first conventional device 1A and the valve diameter of the first valve body 101 must be increased. As a result, the size of the first conventional device 1A itself cannot be reduced, and disposal of the first conventional device 1A tends to become more difficult.

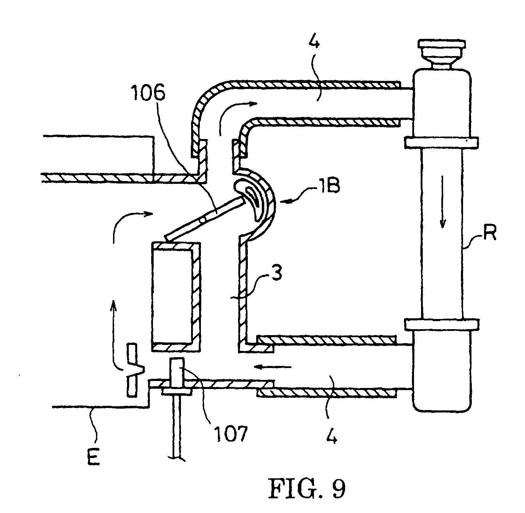

A thermostat device (to be referred to hereafter as a second conventional device) disclosed in Japanese Utility Model Publication H2-14583 is sometimes used instead of the poppet type first conventional device 1A described above. Fig. 9 is a pattern diagram showing the second conventional device disposed in a circulation passage.

In a second conventional device 1B, a butterfly valve 106 for blocking the circulation passage 4 and a detection portion 107 for detecting the temperature of a liquid are provided inside the circulation passage 4, and from a result obtained by the detection portion 107, the valve body 101 is rotated to adjust the flow rate of the cooling fluid. A driving mechanism for rotating the valve body 101 is disposed on the outside of the circulation passage 4.

According to the second conventional device 1B, functional components can be protected from the cooling fluid, and the valve diameter can be enlarged or reduced according to necessity. Thus, the second conventional device 1B has several advantages over the first conventional device 1A.

However, in the second conventional device 1B, the device itself is likely to increase in size. Also, it is difficult to control the flow rate of the bypass passage 3 and the flow rate of the circulation passage 4 accurately, and therefore, overheating or hunting may sometimes occur.

Hence, to solve the problems of the second conventional device 1B, a thermostat device (to be referred to hereafter as a third conventional device) combining the first conventional device with a butterfly valve, for example, is sometimes used. In the third conventional device, the butterfly valve is opened and closed using the expansion/contraction action of the thermal expansion body and the biasing action of a coil spring or the like. However, in the third conventional device, the shaft of the butterfly valve is rotated using biasing force in the spiral direction of the coil spring or the like, and hence it is difficult to set the magnitude of the biasing force (load setting hereafter). Furthermore, with this structure, a large amount of stress is applied to the coil spring or the like, possibly leading to a reduction in the life of the coil spring or the like. Document EP 0890717 shows such a butterfly valve that is rotated by using biasing force in a spiral direction of a coil spring.

### DISCLOSURE OF THE INVENTION

A specific object of the present invention for solving the problems described above is to provide a thermostat device which is capable of preventing overheating and hunting by stabilizing the operation of a valve body while maintaining the advantages of the first conventional device 1A, second conventional device 1B, and so on described above, and which can be provided with a simplified assembly structure and reduced in size.

A thermostat device having such a constitution is provided with a case portion constituted by an upper case and a lower case, the interior of which is formed with a circulation passage through which a circulating fluid flows, a biasing member disposed in the case portion, an element assembly having an in-built thermal expansion body that senses temperature variation in the circulating fluid and expands and contracts accordingly and a thermo-element that is caused to reciprocate by an action of the thermal expansion body and an action of the biasing member, and a valve assembly having a valve body that is formed with a shaft portion supported by the case portion and that opens and closes the circulation passage by rotating using the shaft portion as a fulcrum. In this thermostat device, the thermo-element reciprocates in conjunction with the opening/closing of the valve body, and flow rate control of the circulating fluid is performed by opening and closing the valve body. Each element constituting the valve assembly is pre-assembled to form an integral body, the valve assembly is assembled in the upper case together with the biasing member and the element assembly, and by attaching the lower case to the upper case from a position facing the upper case via the shaft portion, the biasing member, the element assembly, and the valve assembly are fixedly sandwiched therebetween.

With this constitution, the valve assembly is assembled in advance to form an integral body, and therefore reductions in the assembly time and the number of components can be achieved.

Further, the biasing member may be disposed in a position facing the element assembly via the valve assembly, and a linear direction biasing force of the biasing member may be used to bias the valve body, which controls the circulation passage to open and close, in a closing direction.

With this constitution, the linear direction biasing force of the biasing member is used, and therefore, in comparison with a case in which rotary direction biasing force is used, for example, load setting can be performed accurately, and since little stress is applied to the biasing member, the life of the biasing member increases.

Further, the shaft portion may be supported in a position straddling the circulation passage, and a further shaft portion may be supported on the outside of the shaft portion via the element assembly. By providing the thermostat device with this type of shaft portion, the offset load on the shaft portion can be reduced.

Further, the thermostat device may be constituted such that the element assembly has a retainer portion which reciprocates in an orthogonal direction to an axis of the shaft portion, and in a relationship whereby the retainer portion serves as a driver and a cam portion formed on the shaft portion serves as a follower, the reciprocation of the thermo-element and the opening/closing of the valve body are performed in conjunction. In this thermostat device, the cam portion may be constituted by a column portion having the axis of the shaft portion as a rotation center line, and a cam plate that engages with the retainer portion and swings in accompaniment with the reciprocation of the retainer portion using the rotation center line as a fulcrum, and a diameter of the column portion may be formed to be short on the retainer portion side and long on an opposite side.

According to this thermostat device, the diameter of the column portion is shortened on the retainer side, and as a result, partial wear of the cam portion can be prevented. Moreover, the retainer portion reciprocates in an orthogonal direction to the axis of the shaft portion such that a relationship is established whereby the retainer portion is the driver and the cam portion is the follower, and hence the shaft portion (including the cam portion) can be disposed closer to the element side. Thus, the thermostat device can be made more compact.

Further, an external heat generating body may be provided in the vicinity of the thermo-element and so as to be shielded from the cooling liquid in the lower case, and a connector for electrifying the external heat generating body may be provided in a symmetrical position opposing the thermo-element via the valve assembly.

According to the thermostat device having this constitution, the thermo-element can be heated and cooled forcibly without being affected by the temperature of the cooling fluid, and hence the valve body can be opened and closed appropriately. Furthermore, the external heat generating body is provided at a remove from the cooling fluid, and therefore short-circuits and the like can be prevented. Also, short-circuits caused by contact between the connector for electrifying the external heat generating body and the cooling fluid can be reduced, and the thermostat device itself can be made more compact.

### BRIEF DESCRIPTION OF THE DRAWINGS

Fig. 1 is a longitudinal sectional view of a thermostat device according to an embodiment;
Fig. 2 is a sectional view along X-X of Fig. 1;
Fig. 3 is a schematic perspective view principally showing the attachment state of a valve assembly according to this embodiment;
Fig. 4 is an exploded sectional view of the thermostat device according to this embodiment;
Fig. 5 is a schematic side view principally illustrating an action of an element assembly according to this embodiment, and showing a relationship between a thermo-element and a retainer portion;
Fig. 6 is a schematic side view principally illustrating the action of the element assembly according to this embodiment, and showing a relationship between the retainer portion and a cam portion;
Fig. 7 is a pattern diagram showing a state in which a poppet type thermostat device (first conventional device) is disposed in a circulation passage, Fig. 7A showing a state in which a bypass passage is open, and Fig. 7B showing a state in which the bypass passage is closed;
Fig. 8 is a partial sectional side view of the poppet type thermostat device (first conventional device); and
Fig. 9 is a pattern diagram showing a state in which a second conventional device is disposed in a circulation passage.

### BEST MODE FOR CARRYING OUT THE INVENTION

A specific embodiment of the present invention will now be described with reference to the drawings.

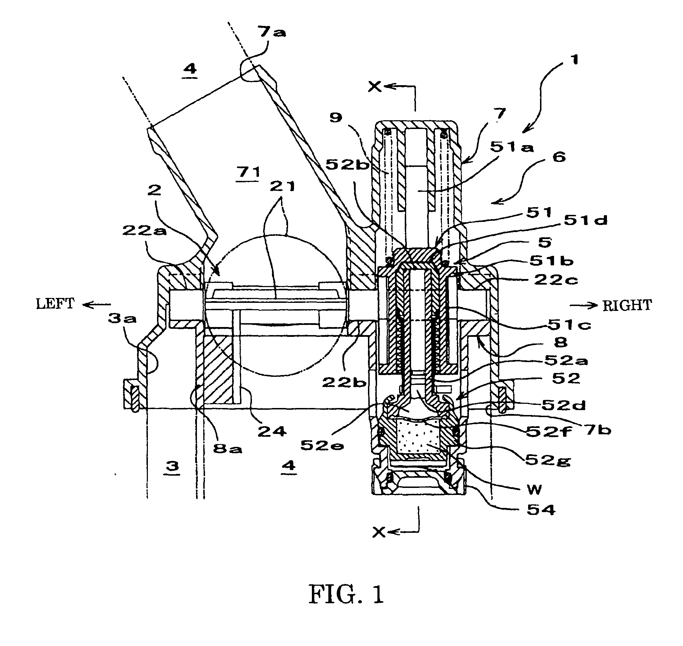

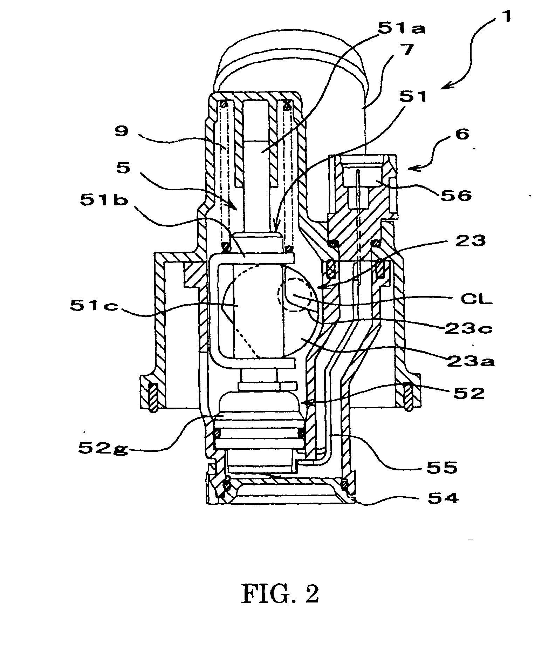

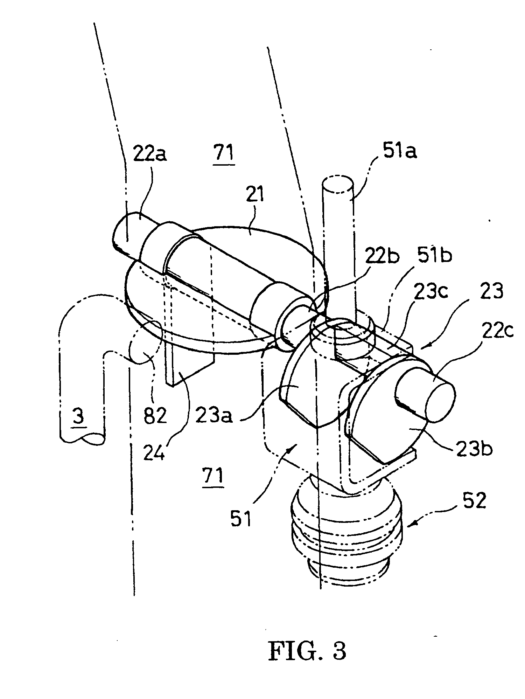

Fig. 1 is a longitudinal sectional view of a thermostat device. Fig. 2 is a sectional view along X-X of Fig. 1. Fig. 3 is a schematic perspective view principally showing the attachment state of a valve assembly.

A thermostat device 1 according to this embodiment is installed by attaching a case portion 6 to a circulation passage 4 serving as the inlet side of an internal combustion engine or the like, similarly to the first conventional device 1A (see Fig. 7). Further, a cooling fluid that serves as a circulating liquid in this embodiment flows through the circulation passage 4, and flow rate control of the cooling fluid flowing through the circulation passage 4 is performed by the thermostat device 1. As a result, cooling fluid having different temperatures is mixed appropriately and thereby maintained at a constant temperature.

The case portion 6 is constituted by an upper case 7 and a lower case 8, and comprises in its interior a passage portion 71 that serves as a part of the circulation passage. A valve assembly 2, an element assembly 5, and so on are assembled in the interior of the case portion 6.

Opening portions 7a, 7b communicating with the circulation passage 4 are formed in the upper and lower sides of the upper case 7. When the lower case 8 is fitted into the upper case 7 so as to be attached thereto, the passage portion 71 is partitioned into an opening portion 7a side and an opening portion 7b side. The partitioned passage portion 71 is opened and closed by opening and closing a valve body 21. Incidentally, the lower side of the passage portion 71 is connected to the circulation passage 4 on an engine E side (see Fig. 7), while the upper side of the passage portion 71 is connected to the circulation passage 4 on a radiator R side (see Fig. 7). Further, the valve body 21, which is denoted by a dot-dot-dash line in Fig. 1, indicates a state in which the passage portion 71 is open.

A bypass passage portion 3a is also formed in the upper case 7. More specifically, when the lower case 8 is attached to the upper case 7, a space surrounded by a side wall 8a of the lower case 8 and the bypass passage portion 3a forms a part of the bypass passage 3. Note that a through hole 82 (see Fig. 3) is formed in the side wall 8a of the lower case 8, and this through hole 82 serves as an inlet/outlet of the bypass passage 3 and the passage portion 71.

The upper case 7 and lower case 8 are fastened together by a bolt to form an integrated body. Further, the valve assembly 2, the element assembly 5, and a return spring 9 serving as a biasing member are assembled in the upper case 7, and by attaching the lower case 8 to the upper case 7, the valve assembly 2 and so on are fixed. The valve assembly 2, element assembly 5, and return spring 9 that are assembled in and fixed to the case portion 6 constituted by the upper case 7 and lower case 8 will now be described.

As shown in Fig. 3, the valve assembly 2 is formed integrally by assembling each element thereof in advance. Each element of the valve assembly 2 will now be described. The substantially circular valve body 21 is disposed in a position within the case portion 6 transecting the passage portion 71. Shaft portions 22a, 22b are formed as diametrical direction projections on the valve body 21, and the shaft portions 22a, 22b are supported by being sandwiched between the upper case 7 and lower case 8. In other words, the valve body 21 rotates using the axis of the shaft portions 22a, 22b as a fulcrum, and by means of this rotation, the passage portion 71 is opened and closed.

An inside cam plate 23a is fixed to an outside end portion (right side end portion in Fig. 1) of the shaft portion 22b. An outside cam plate 23b is fixed to the outside of the inside cam plate 23a via a column portion 23c having a fan-shaped cross-section. The inside cam plate 23a, outside cam plate 23b, and column portion 23c together constitute a cam portion 23 of this embodiment. The cam portion 23 will now be described in detail.

The column portion 23c rotates using the axis of the shaft portions 22a, 22b as a rotation center line CL. Further, a retainer portion 51 that reciprocates in an orthogonal direction to the axis of the shaft portions 22a, 22b, 22c, or in other words a part of the elements of the element assembly 5, is positioned on the flank of the column portion 23c.

The inside cam plate 23a and outside cam plate 23b according to this embodiment are identically shaped plate bodies formed by cutting away a portion of a circle, and the center of this circle is offset to the retainer portion 51 side of the rotation center line CL of the column portion 23c. Further, each of the cam plates 23a, 23b is engaged to the retainer portion 51 so as to swing together with the retainer portion 51. When the cam plates 23a, 23b swing, the shaft portions 22a, 22b, 22c rotate, and this causes the valve body 21 to open and close. Further, the diameter of the column portion 23c to the outer edge, using the rotation center line CL as a reference, is short on the retainer portion 51 side and long on the opposite side. By means of this structure, partial wear of the cam portion 23 can be prevented, and the size of the thermostat device 1 itself can be reduced.

Note that the member denoted by the reference numeral 24 in Figs. 1 and 3 is a bypass valve. The bypass valve 24 is formed integrally with the shaft portion 22a, together with the valve body 21, on the lower surface of the valve body 21. Accordingly, when the valve body 21 rotates to open the passage portion 71, the bypass valve 24 also swings upward, thereby blocking the through hole 82 (see Fig. 3) serving as the outlet/inlet of the bypass passage 3. In other words, through the action of the valve assembly 2 in which the bypass valve 24 and valve body 21 are formed integrally, opening/closing of the passage portion 71 and opening/closing of the bypass passage 3 are performed simultaneously.

Further, in the thermostat device 1 according to this embodiment, another shaft portion 22c is formed as a projection on the outside (the right side in Fig. 1) of the outside cam plate 23b. Similarly to the shaft portions 22a, 22b, this shaft portion 22c is supported by the case portion 6, and has an identical rotary axis to the shaft portions 22a, 22b. In other words, the shaft portions 22a, 22b of the valve assembly 2 according to this embodiment are supported in positions straddling the passage portion 71, while the shaft portion 22c is supported on the opposite side of the element assembly 5 to the shaft portions 22a, 22b. By means of this structure, the offset load on the shaft portions 22a, 22b, 22c is lightened.

Next, the element assembly 5 having the retainer portion 51 as a part of the elements thereof will be described. As shown in Figs. 1 and 2, the element assembly 5 can be roughly divided into the retainer portion 51 and a thermo-element 52 that causes the retainer portion 51 to reciprocate. The retainer portion 51 is constituted by a tube body 51c provided with a guide bar 51a on its upper end, and a frame body 51b fixed to the outer peripheral surface of the tube body 51c. The frame body 51b is substantially C-shaped, and the cam plates 23a, 23b of the cam portion 23 are attached to the opening thereof as if to be swallowed thereby (see Figs. 2 and 3). In other words, a state in which the frame body 51b swallows the cam plates 23a, 23b corresponds to a state in which the retainer portion 51 and the cam portion 23 are engaged. When the frame body 51b reciprocates, the circumferential surface of the cam plates 23a, 23b rotates (swings) with a part thereof remaining in contact with the inner wall of the frame body 51b.

A cylinder portion 52a of the thermo-element 52 is accommodated within the tube body 51c of the retainer portion 51. Further, a piston 52b is accommodated within the cylinder portion 52a. The piston 52b is free to rise and fall from an upper end of the cylinder portion 52a, and a thermal expansion body W and so on are installed in the lower portion of the cylinder portion 52a. The thermal expansion body W is surrounded by a wax case 52g, and the temperature of the cooling fluid flowing through the passage portion 71 propagates to the thermal expansion body W through the wax case 52g. The thermal expansion body W expands and contracts in accordance with this thermal propagation.

The expansion/contraction action of the thermal expansion body W is transmitted to the piston 52b via a diaphragm 52f, a semifluid 52e, a backup plate 52d, and so on. When the piston 52b rises due to expansion of the thermal expansion body W, a cap body 51d is pushed upward. When the cap portion 51d is pushed upward, the entire retainer portion 51 is lifted upward. Note that the cap body 51d is held by bellows 52c about the lower end periphery thereof, and the outer peripheral surface thereof contacts the inner wall of the tube body 51c. Further, the bellows 52c maintain a seal between the inner wall of the tube body 51c and the cylinder portion 52a.

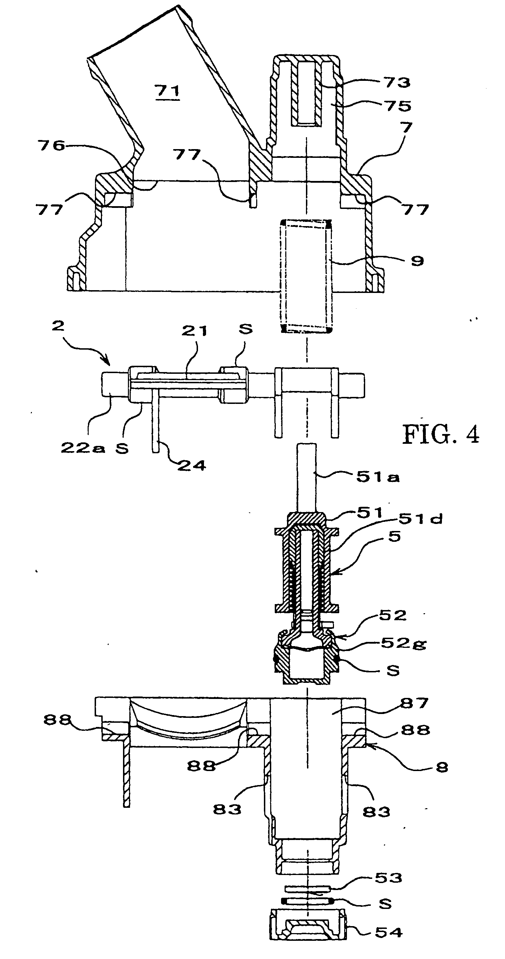

Next, assembly of the valve assembly 2, element assembly 5, and return spring 9 in the case portion 6 will be described mainly with reference to Fig. 4. Fig. 4 is an exploded sectional view of the thermostat device 1.

The upper case 7 is formed with a columnar chamber portion 75 in which the upper portion of the element assembly 5, or in other words mainly the retainer portion 51, is fitted. A tubular guide body 73 is formed in the chamber portion 75 as a projection projecting downward from a ceiling surface, and the guide bar 51a of the retainer portion 51 is fitted into the tubular guide body 73. The return spring 9 is disposed on the periphery of the tubular guide body 73, and the return spring 9 biases the retainer portion 51 downward within the chamber portion 75.

The return spring 9 of this embodiment is disposed in a position sandwiching the valve assembly 2, or in other words within the upper case 7. Further, the return spring 9 is a coil spring that biases the valve body 21 in a closing direction via the element assembly 5 by means of a downward linear direction biasing force. With this structure, load setting of the biasing member can be performed accurately and such that stress on the biasing member is small. As a result, the life of the biasing member is lengthened.

The lower case 8 is formed with a tubular chamber portion 87 in which the lower portion of the element assembly 5, or in other words mainly the thermo-element 52, is fitted. A through hole 83 is formed in a side face of the tubular chamber portion 87. Thus, cooling fluid that flows into the passage portion 71 passes through the through hole 83 and flows around the wax case 52g. As a result, the temperature of the cooling fluid is propagated efficiently to the thermal expansion body W via the wax case 52g.

The lower end of the tubular chamber portion 87 is open, and an external heat generating body 53 such as a PTC or a Peltier element is attached to this lower end portion. Note that the external heat generating body 53 is fixed by screwing and tightening a cap 54 holding a sealing member S or fitting the cap (using a connection structure such as a connector, for example). Meanwhile, the sealing member S is attached as a ring between the wax case 52g of the thermo-element 52 and the tubular chamber portion 87. Hence, the external heat generating body 53 is removed from the cooling fluid, and there is no danger of the cooling fluid infiltrating the external heat generating body 53. As a result, short circuits caused by contact between the external heat generating body 53 and the cooling fluid are prevented. Further, as shown in Fig. 2, a harness 55 having a copper cable or the like in its interior is connected to the external heat generating body 53, and a connector 56 for electrifying the external heat generating body 53 is connected to the harness 55.

By providing the external heat generating body 53, the following action is exhibited. When the external heat generating body 53 is electrified on the basis of a signal from the exterior (an ECU), the external heat generating body 53 generates heat. When the external heat generating body 53 is a Peltier element or the like, cooling may also be performed. When this type of external heat generating body 53 is used, the valve body 21 can be forcibly opened even in cases where warm-up of the internal combustion engine or the like is insufficient such that the temperature of the cooling fluid has not risen, for example. Conversely, the valve body 21 can also be forcibly closed, and hence responsiveness to various situations can be increased.

Note that in this embodiment, the external heat generating body 53 is provided in a position contacting the lower end portion of the thermo-element 52, or in other words the wax case 52g. However, the meaning of "in the vicinity of" in the claims is not limited to the lower end portion of the thermo-element 52. In other words, any position in which the thermal expansion body W can expand and contract without being affected by thermal propagation from the cooling fluid is suitable.

Furthermore, in this embodiment the connector 56 is positioned in a symmetrical position opposing the thermo-element 52 via the valve assembly 2, or in other words on the upper case 7 side (see Fig. 1). As a result, the connector 56 is less likely to contact the cooling fluid, thereby causing a short circuit or the like, and the thermostat device 1 itself can be made more compact.

The upper case 7, lower case 8, valve assembly 2 and so on may be molded using aluminum, an aluminum alloy, resin, or another material appropriately. Note, however, that resin is preferable since it is lightweight and easy to process and assemble.

The upper case 7 and lower case 8 containing the assembled valve assembly 2, element assembly 5, and so on are attached by a bolt. More specifically, the lower case 8 is fitted into the upper case 7 such that the upper end of the lower case 8 contacts and is latched to a latch portion 76 in the upper case 7, and then fixed to the upper case 7 by a bolt. Further, reception portions 77, 88 for supporting the shaft portion 22a and so on of the valve assembly 2 are formed in the contact locations between the upper case 7 and lower case 8.

In other words, by attaching the lower case 8 to the upper case 7 from a position facing the upper case 7 via the shaft portion 22a and so on, the valve assembly 2, return spring 9, and element assembly 5 are assembled and fixed, thereby completing formation of the thermostat device 1. Although detailed description thereof has been omitted, the member denoted by the reference symbol S in Figs. 1 through 4 is a sealing member.

The actions of the thermostat device 1 will now be described.

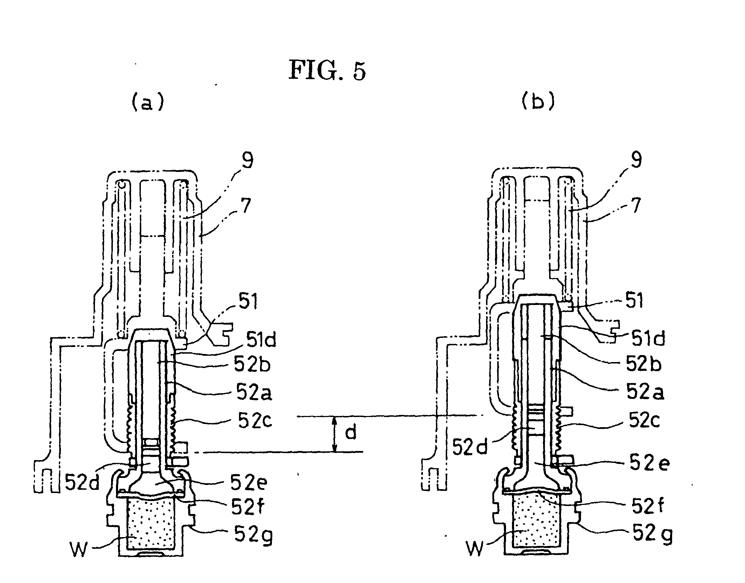

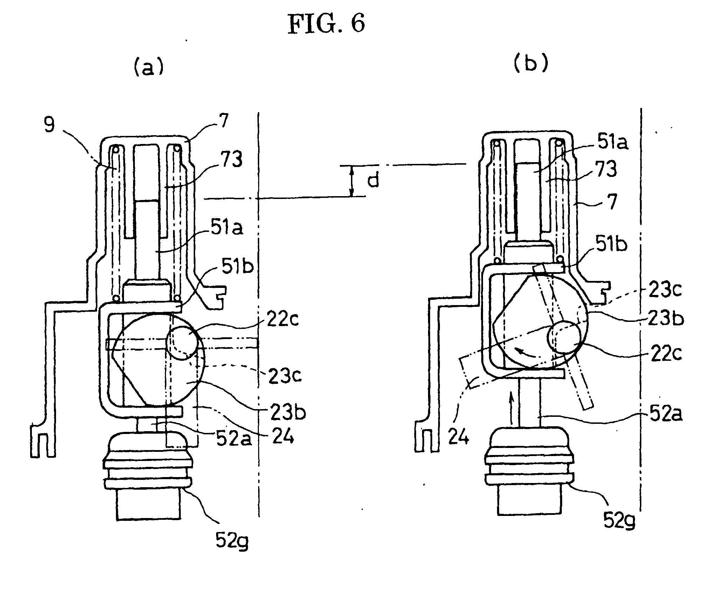

Figs. 5 and 6 are schematic side views principally illustrating an action of the element assembly 5 in the thermostat device 1. Fig. 5 illustrates the relationship between the thermo-element 52 and the retainer portion 51, while Fig. 6 illustrates the relationship between the retainer portion 51 and the cam portion 23.

Further, A and B in both Figs. 5 and 6 show a state in which the thermal expansion body is contracted and a state in which the thermal expansion body is expanded, respectively.

When the temperature of the cooling fluid flowing through the passage portion 71 is low, the thermal expansion body W contracts, as shown in Figs. 5A and 6A. In this case, as shown in Fig. 5A, the piston 52b of the thermo-element 52 sinks, and the retainer portion 51 is held down by the biasing force of the return spring 9. When the retainer portion 51 is held down, the column portion 23c is positioned in the upper portion of the frame body 51b, as shown in Fig. 6A, and therefore the valve body 21 closes the passage portion 71.

When the temperature of the cooling fluid rises, the thermal expansion body W of the element assembly 5 expands. In this case, as shown in Fig. 5B, the piston 52b of the thermo-element 52 rises by a distance d, whereby the retainer portion 51 is pushed upward by the distance d against the biasing force of the return spring 9 (see Fig. 6B).

Then, as shown in Fig. 6B, the outside cam plate 23b (and likewise the inside cam plate 23a) rotates (swings) while a part thereof slidingly contacts the inside of the frame body 51b. As the cam plates swing, the column portion 22c and the shaft portion 22a and so on rotate, causing the valve body 21 to rotate. In other words, in a relationship where the retainer portion 51 serves as a driver and the cam portion 23 serves as a follower, the reciprocation of the thermo-element 52 and the opening/closing of the valve body 21 are performed in conjunction.

Cooling fluid temperature control using the thermostat device 1 according to this embodiment will now be described briefly. When the temperature of the cooling fluid is lower than a predetermined temperature, the valve body 21 closes the passage portion 71 through the action of the element assembly 5. In this case, the cooling fluid circulates between the bypass passage 3 and the circulation passage 4 on the engine E side, and warm-up is achieved by driving the engine E (see Fig. 7A). On the other hand, when the cooling fluid reaches or exceeds the predetermined temperature, the valve body 21 gradually opens the passage portion 71 through the action of the element assembly 5, and at the same time the bypass passage 3 is closed. As a result, the circulation passage 4 on the radiator R side opens such that low-temperature cooling fluid mixes with the high-temperature cooling fluid, and thus the cooling fluid is cooled (see Fig. 7B). By repeating this action, the temperature of the cooling fluid is held within a fixed range.

According to the thermostat device 1 described above, the operation of the valve body 21 can be stabilized, thereby preventing overheating and hunting. Moreover, the thermostat device 1 can be provided with a simplified assembly structure and reduced in size.

Further, when the external heat generating body 53 is provided, as in the thermostat device 1 according to this embodiment, the thermal expansion body W can be heated by electrifying the external heat generating body 53 when the circulation passage 4 on the radiator R side is to be opened but warm-up is insufficient, for example, and thus the thermal expansion body W can be caused to expand such that the valve body 21 is forcibly opened.

According to the present invention, faults and so on can be reduced, and a stable valve body operation can be realized.

Moreover, the thermostat device itself can be reduced in size, the assembly operation thereof can be simplified, and the number of components thereof can be reduced.

According to the invention of claim 2, the biasing member acts with the reciprocation of the thermo-element, and this reciprocation is performed in conjunction with the valve body. Hence, a biasing member that acts directly on the shaft portion becomes unnecessary, and the shaft portion does not have to be rotated using the spiral direction biasing force of a coil spring or the like. Thus, in addition to the effects described above, load setting can be performed accurately in comparison with a case in which rotary direction biasing force is used. Moreover, the amount of stress applied to the biasing member can be reduced, enabling an increase in the life of the biasing member. Furthermore, the axial direction overhang of the shaft portion can be reduced, enabling a reduction in the size of the thermostat device itself.

According to the invention of claim 3, in addition to the effects described above, the amount of offset load on the shaft portion can be reduced.

According to the invention of claim 4, in addition to the effects described above, partial wear of the cam portion can be prevented. Furthermore, the retainer portion reciprocates in an orthogonal direction to the axis of the shaft portion, thereby establishing a relationship in which the retainer portion serves as a driver and the cam portion serves as a follower, and thus the shaft portion (including the cam portion) can be disposed closer to the element side. As a result, the thermostat device can be made more compact.

According to the invention of claim 5, in addition to the effects described above, the thermo-element can be heated and cooled forcibly without being affected by the temperature of the cooling fluid, and therefore the valve body can be opened and closed appropriately. Further, the external heat generating body is provided at a remove from the cooling fluid, and therefore short-circuits and the like can be prevented.

According to the invention of claim 6, in addition to the effects described above, short-circuits caused by contact between the connector for electrifying the external heat generating body and the cooling fluid can be reduced, and the thermostat device can be made more compact.

## Claims

1. A thermostat device (1) having :
- a case portion (6) constituted by an upper case (7) and a lower case (8), the interior of which is formed with a circulation passage (4) through which a circulating fluid flows,
- a biasing member (9) disposed in said case portion (6),
- an element assembly (5) having an in-built thermal expansion body (W) that senses temperature variation in said circulating fluid and expands and contracts accordingly and a thermo-element (52) that is caused to reciprocate by an action of said thermal expansion body (W) and an action of said biasing member (9), and
- a valve assembly (2) having a valve body (21) that is formed with a shaft portion (22a, 22b) supported by said case portion (6) and that opens and closes said circulation passage (4) by rotating using said shaft portion (22a, 22b) as a fulcrum, wherein said thermo-element (52) reciprocates in conjunction with the opening/closing of said valve body (21), and flow rate control of said circulating fluid is performed by opening and closing said valve body (21),
**characterized in that** each element constituting said valve assembly (2) is pre-assembled to form an integral body, said valve assembly (2) is assembled in said upper case (7) together with said biasing member (9) and said element assembly (5), and by attaching said lower case (8) to said upper case (7) from a position facing said upper case (7) via said shaft portion (22a, 22b), said biasing member (9), said element assembly (5), and said valve assembly (2) are fixedly sandwiched therebetween.

2. The thermostat device (1) according to claim 1, **characterized in that** said biasing member (9) is disposed in a position facing said element assembly (5) via said valve assembly (2), and a linear direction biasing force of said biasing member (9) is used to bias said valve body (21), which controls said circulation passage (4) to open and close, in a closing direction.

3. The thermostat device (1) according to claim 1 or claim 2, **characterized in that** said shaft portion (22a, 22b) is supported in a position straddling said circulation passage (4), and a further shaft portion (22c) is supported on the outside of said shaft portion via said element assembly (5).

4. The thermostat device (1) according to any one of claim 1 through claim 3, wherein said element assembly (5) has a retainer portion (51) that reciprocates in an orthogonal direction to an axis of said shaft portion (22a, 22b), and in a relationship whereby said retainer portion (51) serves as a driver and a cam portion (23) formed on said shaft portion (22b) serves as a follower, the reciprocation of said thermo-element (52) and the opening/closing of said valve body (21) are performed in conjunction,
**characterized in that** said cam portion (23) is constituted by a column portion (23c) having said axis of said shaft portion (22a, 22b) as a rotation center line (CL), and a cam plate (23a, 23b) that engages with said retainer portion (51) and swings in accompaniment with the reciprocation of said retainer portion (51) using said rotation center line (CL) as a fulcrum, and
a diameter of said column portion (23c) based on said rotation center line (CL) is formed to be short on said retainer portion (51) side and long on an opposite side.

5. The thermostat device (1) according to any one of claim 1 through claim 4, **characterized in that** an external heat generating body (53) is provided in the vicinity of said thermo-element (52) and so as to be shielded from said cooling liquid in said lower case(8).

6. The thermostat device (1) according to claim 5, **characterized in that** a connector (56) for electrifying said external heat generating body (53) is provided in a symmetrical position opposing said thermo-element (52) via said valve assembly (2).

## Patentansprüche

1. Thermostateinrichtung (1) mit:
- einem Gehäusebereich (6) aufweisend ein oberes Gehäuse (7) und ein unteres Gehäuse (8), dessen Inneres mit einem Kreislauf-Durchgang (4) ausgebildet ist, durch welchen ein zirkulierendes Fluid strömt,
- einem Vorspannelement (9), das in dem Gehäusebereich (6) angeordnet ist,
- einer Elementen-Verbindung (5) mit einem eingebauten thermischen Expansionskörper (W), welcher Temperaturänderungen in dem zirkulierenden Fluid wahrnimmt and entsprechend expandiert und kontrahiert, und mit einem Thermoelement (52), das durch eine Wirkung des thermischen Expansionskörpers (W) und eine Wirkung des Vorspannelements (9) veranlasst sich hin- und herbewegt, und
- einer Ventil-Baugruppe (2) mit einem Ventilkörper (21), der mit einem von dem Gehäusebereich (6) gestützten Schaft-Bereich (22a, 22b) ausgebildet ist und der durch Drehen unter Verwendung des Schaft-Bereichs (22a, 22b) als Drehpunkt den Kreislauf-Durchgang (4) öffnet und schließt, wobei das Thermoelement (52) sich in Verbindung mit dem Öffnen/Schließen des Ventilkörpers (21) hin- und herbewegt, und wobei die Steuerung der Durchflussrate des zirkulierenden Fluids durch Öffnen und Schließen des Ventilkörpers (21) erfolgt,
**dadurch gekennzeichnet, dass** jedes Element, das die Ventil-Baugruppe (2) bildet, zur Ausbildung eines integralen Körpers vormontiert ist, dass die Ventil-Baugruppe (2) in dem oberen Gehäuse (7) zusammen mit dem Vorspannelement (9) und der Elementen-Verbindung (5) montiert ist und dass durch Befestigen des unteren Gehäuses (8) an das obere Gehäuse (7) von einer dem oberen Gehäuse (7) über den Schaft-Bereich (22a, 22b) gegenüberliegenden Position das Vorspannelement (9), die Elementen-Verbindung (5) und die Ventil-Baugruppe (2) fest dazwischen eingeklemmt sind.

2. Thermostateinrichtung (1) nach Anspruch 1, **dadurch gekennzeichnet, dass** das Vorspannelement (9) in einer der Elementen-Verbindung (5) über die Ventil-Baugruppe (2) gegenüberliegenden Position angeordnet ist und dass eine linear gerichtete Vorspannkraft des Vorspannelements (9) zum Vorspannen des Ventilkörpers (21), welcher das Öffnen und Schließen des Kreislauf-Durchgangs (4) steuert, in eine Schließrichtung verwendet wird.

3. Thermostateinrichtung (1) nach Anspruch 1 oder 2, **dadurch gekennzeichnet, dass** der Schaft-Bereich (22a, 22b) in einer Position, die den Kreislauf-Durchgang (4) überspannt, gestützt wird und dass ein weiterer Schaft-Bereich (22c) außerhalb des Schaft-Bereichs über die Elementen-Verbindung (5) gestützt wird.

4. Thermostateinrichtung (1) nach einem der Ansprüche 1 bis 3, wobei die Elementen-Verbindung (5) einen Halterungsbereich (51) hat, der sich in einer senkrechten Richtung zu einer Achse des Schaft-Bereichs (22a, 22b) hin- und herbewegt und in einer Anordnungsbeziehung, bei der der Halterungsbereich (51) als ein Antrieb dient und ein Nockenbereich (23), der auf dem Schaft-Bereich (22b) ausgebildet ist, als ein Folger dient, und wobei das Hin- und Herbewegen des Thermoelements (52) und das Öffnen/Schließen des Ventilkörpers (21) in Verbindung miteinander ausgeführt werden,
**dadurch gekennzeichnet, dass** der Nockenbereich (23) einen Säulenbereich (23c), der die Achse des Schaft-Bereichs (22a, 22b) als Rotationsmittellinie (CL) hat, und eine Nockenplatte (23a, 23b) umfasst, die in den Halterungsbereich (51) eingreift und zusammen mit dem Hin- und Herbewegen des Halterungsbereichs (51) schwingt, wobei die Rotationsmittellinie (CL) als Drehpunkt genutzt wird, und
dass ein auf der Rotationsmittellinie (CL) basierender Durchmesser des Säulenbereichs (23c) auf der Seite des Halterungsbereichs (51) kurz und auf einer gegenüberliegenden Seite lang ausgebildet ist.

5. Thermostateinrichtung (1) nach einem der Ansprüche 1 bis 4, **dadurch gekennzeichnet, dass** ein externer wärmeerzeugender Körper (53) in der Umgebung des Thermoelements (52) vorgesehen ist und zwar derart, dass er von der Kühlflüssigkeit in dem unteren Gehäuse (8) geschützt ist.

6. Thermostateinrichtung (1) nach Anspruch 5, **dadurch gekennzeichnet, dass** ein Stecker (56) zur Stromversorgung des externen wärmeerzeugenden Körpers (53) in einer symmetrischen Position dem Thermoelement (52) durch die Ventil-Baugruppe (2) gegenüberstehend vorgesehen ist.

## Revendications

1. Dispositif de thermostat (1) ayant :
- une portion formant boîtier (6) constituée d'un boîtier supérieur (7) et d'un boîtier inférieur (8), dont l'intérieur est formé avec un passage de circulation (4) dans lequel s'écoule un fluide de circulation,
- un élément de sollicitation (9) disposé dans ladite portion formant boîtier (6),
- un assemblage d'éléments (5) ayant un corps incorporé (W) à dilatation thermique qui détecte les variations de température dans ledit fluide de circulation et se dilate et se contracte en fonction de celle-ci, et un thermo-élément (52) qui est animé d'un mouvement va et vient sous l'action dudit corps incorporé (W) à dilatation thermique et sous l'action de l'élément de sollicitation (9), et
- une unité de vanne (2) ayant un corps (21) de vanne formé avec une portion de tige (22a, 22b) supportée par ladite portion formant boîtier (6) et qui ouvre et ferme ledit passage de circulation (4) par rotation en utilisant ladite portion de tige (22a, 22b) comme axe de pivotement, ledit thermo-élément (52) étant mû d'un mouvement de va et vient en conjonction avec l'ouverture/fermeture dudit corps (21) de vanne, et la régulation du débit dudit fluide de circulation étant effectuée par ouverture et fermeture dudit corps (21) de vanne,
***caractérisé en ce que*** chaque élément constituant ladite unité (2) de vanne est pré-assemblé pour former un corps solidaire, ladite unité (2) de vanne est assemblée dans ledit boîtier supérieur (7) avec ledit élément de sollicitation (9) et ledit assemblage d'éléments (5), et en fixant ledit boîtier inférieur (8) au dit boîtier supérieur (7) depuis une position faisant face au dit boîtier supérieur (7) via ladite portion de tige (22a, 22b), ledit élément de sollicitation (9), ledit ensemble d'éléments (5), et ladite unité de vanne (2) sont fixement intercalés entre ceux-ci.

2. Dispositif de thermostat (1) selon la revendication 1, ***caractérisé en ce que*** ledit élément de sollicitation (9) est placé dans une position faisant face au dit assemblage d'éléments (5) via ladite unité de vanne (2), et une force de sollicitation dudit élément de sollicitation (9), de direction linéaire, est utilisée pour solliciter ledit corps (21) de vanne, qui commande l'ouverture et la fermeture dudit passage de circulation (4), dans une direction de fermeture.

3. Dispositif de thermostat (1) selon la revendication 1 ou 2, ***caractérisé en ce que*** ladite portion de tige (22a, 22b) est supportée dans une position enjambant ledit passage de circulation (4), et une autre portion de tige (22c) est supportée sur l'extérieur de ladite portion de tige via ledit assemblage d'éléments (5).

4. Dispositif de thermostat (1) selon l'une quelconque des revendications 1 à 3, dans lequel ledit assemblage d'éléments (5) possède une portion de retenue (51) qui est mue d'un mouvement de va et vient dans une direction orthogonale à un axe de ladite portion de tige (22a, 22b), et dans une relation où ladite portion de retenue (51) sert d'entraînement et une portion de came (23) formée sur ladite portion de tige (22b) sert de galet suiveur, le mouvement de va et vient dudit thermo-élément (52) et l'ouverture/fermeture dudit corps (21) de vanne sont effectués conjointement,
***caractérisé en ce que*** ladite portion (23) de came est constituée d'une portion (23c) de colonne ayant ledit axe de ladite portion de tige (22a, 22b) comme axe de rotation (CL), et d'une came disque (23a, 23b) qui s'engage avec ladite portion de retenue (51) et bascule en accompagnement du mouvement de va-et-vient de ladite portion de retenue (51) en utilisant ledit axe de rotation (CL) comme axe de pivotement, et
un diamètre de ladite portion de colonne (23c) basée sur ledit axe de rotation (CL) est formé de manière à être court sur le côté de ladite portion de retenue (51) et long sur un côté opposé.

5. Dispositif de thermostat (1) selon l'une quelconque des revendications 1 à 4, ***caractérisé en ce qu'**un* corps (53) produisant de la chaleur externe est présent au voisinage dudit thermo-élément (52) et de manière à être protégé dudit liquide de refroidissement dans ledit boîtier inférieur (8).

6. Dispositif de thermostat (1) selon la revendication 5, ***caractérisée en ce qu'**un* connecteur (56) pour l'électrification dudit corps (53) produisant de la chaleur externe est prévu dans une position symétrique opposée au dit thermo-élément (52) via ladite unité de vanne (2).
